# EUROPÄISCHE PATENTANMELDUNG

(11) **EP 3 766 339 A1**
(43) Veröffentlichungstag der Anmeldung: **20.01.2021**
(21) Anmeldenummer: 20184716.7
(22) Anmeldetag: 08.07.2020
(51) Int. Cl.: A01J 7/02, G02B 27/00

(54) **REINIGUNG EINER FRONT EINES OPTISCHEN GERÄTS EINES MELKSTANDS**

(30) Priorität: 19.07.2019 DE 102019119661
(71) Anmelder: GEA Farm Technologies GmbH, 59199 Bönen (DE)
(72) Erfinder: Wiethoff, Magnus, 59514 Welver (DE)
(74) Vertreter: Neumann, Ditmar

(57) **Zusammenfassung**

Es werden eine Anordnung sowie ein entsprechendes Verfahren zur Reinigung einer Front (2) eines optischen Geräts (3) mit einer beweglichen Kappe (4) mittels eines Fluids beschrieben. Die Kappe steht über eine Zuführung (7) und eine Abführung (8) für das Fluid in einer Fluidverbindung mit einer Reinigungsvorrichtung des Melkstands steht.

## Beschreibung

Die Erfindung betrifft eine Anordnung umfassend wenigstens einen Melkstand, der ein optisches Gerät aufweist, und eine Vorrichtung zur Reinigung einer Front des optischen Geräts mittels eines Fluids.. Insbesondere kann die erfindungsgemäße Anordnung zur Reinigung einer Linse oder Schutzabdeckung einer Linse einer Kamera, welche in einem Melkstand angeordnet ist, ausgelegt und vorgesehen sein.

Das Melken von Tieren wird heute typischerweise mit Hilfe von Maschinen durchgeführt. Für das maschinelle und automatisierte Melken von beispielsweise einer Kuh ist ein Melkstand bekannt, in dem das Melkgeschirr dem Tier vollautomatisch angelegt wird, nachdem das Tier in den Melkstand eingetreten ist. Der Melkstand weist seitliche Begrenzungen sowie eine Begrenzung am Kopfende auf, sodass das Tier in den Melkstand eintritt und dort während des Melkvorgangs stehen bleibt. Im Folgenden wird die Erfindung mit einer Kuh als zu melkendes Tier beschrieben, wobei diese beispielhaft für ein jegliches anderes melkbares Tier genannt ist.

Der Melkstand weist dazu ein Melkgeschirr mit Zitzenbechern auf, wobei der Melkstand dazu eingerichtet ist, die Zitzenbecher des Melkgeschirrs präzise anzusetzen. Der Melkstand beziehungsweise der Melkroboter des Melktands ist dementsprechend dazu vorgesehen und eingerichtet die genaue Position des zu melkenden Tieres und insbesondere die genaue Position der Zitzen des Tieres zu ermitteln, an welche jeweils ein Melkbecher anzusetzen ist. Die Melkbecher werden dabei nacheinander und jeweils so angesetzt, dass dieser genau die Position der Zitze trifft.

Die Position einer Zitze wird dazu automatisiert ermittelt, anschließend wird der für eine Zitze vorgesehene Melkbecher mittels eines bewegbaren Arms an der Zitze entsprechend positioniert. Zur automatisierten Ermittlung der Position einer Zitze weist der Melkroboter beziehungsweise der Melkstand eine optische Einrichtung auf, welche Bilder von dem Tier und insbesondere von dem Euter und den Zitzen erzeugt und dazu eingerichtet und vorgesehen ist, die genaue Position der Zitzen zu ermitteln. Die optische Einrichtung ist typischerweise dazu vorgesehen und eingerichtet, die erzeugten Bilder des Tieres mittels eines Verarbeitungsprogramms zu verarbeiten und auszuwerten, dass die genaue Position der Zitzen bekannt ist. Der Melkroboter kann dazu einen digitalen Signalprozessor sowie Speicher mit einem Computerprogramm zur digitalen Bildverarbeitung umfassen und ist kommunikativ mit der optischen Einrichtung verbunden, sodass der Melkroboter die Erzeugung von Bildern steuern und die erzeugten Bilder anschließend verarbeiten und auswerten kann, um die Position der einzelnen Zitzen zu ermitteln.

Das optische Gerät zur Erzeugung der Bilder, also beispielsweise eine Kamera, ist in dem Melkstand bzw. dem Melkroboter so angeordnet, dass diese ein Bild des Tiereuters und der Zitzen erzeugen kann. Typischerweise ist die Kamera dazu in der Nähe des Bodens des Melkstands und in der Nähe des Euters angeordnet.

Daraus ergibt sich das Problem, dass die optische Vorrichtung verschmutzt werden kann und die erzeugten Bilder daher unbrauchbar sein können. Der Melkstand und das Melkgeschirr wird zwar regelmäßig gereinigt, jedoch können Reinigungsrückstände auf der optischen Vorrichtung verbleiben. Damit ergibt sich das technische Problem, dass vor dem Beginn der Prozedur des Anlegens der Melkbecher sicherzustellen ist, dass die Optik der optischen Vorrichtung nicht verschmutzt ist.

Dieses Problem wird durch eine Anordnung umfassend wenigstens einen Melkstand, der ein optisches Gerät aufweist, und eine Vorrichtung zur Reinigung einer Front des optischen Geräts mittels eines Fluids gemäß dem unabhängigen Anspruch 1 gelöst oder zumindest soweit abgestellt, dass brauchbare Bilder erzeugt werden. Vorteilhafte Ausgestaltungen sind in den Unteransprüchen genannt.

Der Begriff Front eines optischen Geräts bezeichnet in diesem Kontext eine Frontseite eines optischen Geräts, wobei das optische Gerät bevorzugt eine Kamera ist und die Frontseite diejenige Seite bezeichnet, an welcher das Kameraobjektiv platziert ist. Die Frontseite kann ein Objektiv einer Kamera, oder eine durchsichtige Abdeckung, oder Schutzabdeckung eines solchen Kameraobjektivs, oder ähnliches sein.

Im Folgenden wird die Erfindung anhand von Zeichnungen erläutert. Es zeigen
- Fig. 1: eine schematische Darstellung eines Ausschnitts einer perspektivischen Aufsicht eines optischen Geräts mit der Vorrichtung;
- Fig. 2a-c: schematische Ansichten einer Kappe zur Reinigung;
- Figs. 3a-c: schematische Schnittansichten der Vorrichtung und des optischen Geräts in verschiedenen Betriebszuständen.
- Fig. 4: Verfahrensschritte zur Reinigung der Front eines optischen Geräts.

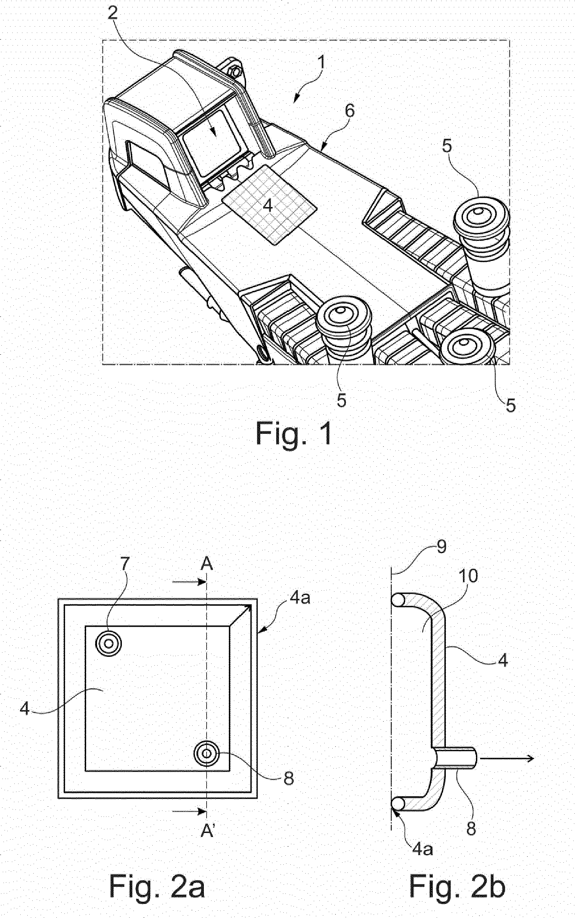

Figur 1 zeigt eine Vorrichtung 1 zur Reinigung einer Front 2 eines optischen Geräts. Das optische Gerät ist dabei typischerweise ein beliebiges Gerät, typischerweise eine Kamera. Das Objektiv des optischen Geräts, also der Kamera kann dabei die zu reinigende Frontseite des optischen Geräts bilden, oder eine Schutzabdeckung des Objektivs, wenn vorhanden.

In dem hier beschriebenen Ausführungsbeispiel ist das optische Gerät 3 eine Kamera, die in einen Melkstand integriert ist. Der Melkstand ist dazu vorgesehen und eingerichtet, die Melkbecher des Melkgeschirrs eines Melkautomaten an die Zitzen des Euters des zu melkenden Tieres anzulegen, sodass der Melkautomat das Tier abmelken kann.

Zum Anlegen der Melkbecher an die Zitzen des Tieres muss dem Melkautomaten die genaue Position der Zitzen bekannt sein. Betritt das zu melkende Tier, beispielsweise eine Kuh, den Melkstand, so ist zwar die ungefähre Position des Tieres sowie der Zitzen bekannt, jedoch nicht hinreichend genau. Eine hinreichend genaue Position der Zitzen wird mit Hilfe der Kamera 3 ermittelt. Dabei erzeugt die Kamera 3 Bilder von zumindest dem Euter und den Zitzen des zu melkenden Tieres und überträgt die erzeugten Bilder an eine digitale Signalverarbeitung und Steuerung. Diese ermittelt aus den erzeugten Bildern mittels digitaler Bildverarbeitung eine hinreichend genaue Position der Zitzen des Tieres und überträgt diese Information an die Steuerung des Melkroboters beziehungsweise des Melkstands, sodass dieser die Melkbecher 5 an die Zitzen anlegen kann.

Das optische Gerät 3, hier die Kamera, ist in den Melkroboter beziehungsweise den Melkstand 6 integriert und so ausgerichtet, dass das Euter sowie die Zitzen des zu melkenden Tieres aus einer Position unterhalb des Euters abgebildet werden. In einer konkreten Ausführungsform ist die optische Achse des optischen Geräts 3, hier also der Kamera, aus der horizontalen um 18° nach oben gekippt, sodass die Frontseite des optischen Geräts nicht vertikal steht, sondern in Bezug auf eine Horizontale einen Winkel von 108° einschließt. Auch aus diesem Grunde haftet Schmutz, der auf die Frontseite des optischen Geräts trifft, also auf ein Objektiv, oder eine entsprechende Schutzabdeckung, daran an oder hinterlässt Spuren. Solche Verschmutzungen können beispielsweise durch Tritte des zu melkenden Tiers oder durch Spritzwasser verursacht werden.

In der hier dargestellten Ausführungsform weist die Frontseite 2 des optischen Geräts eine im Wesentlichen eckige Form auf, deren Ecken jedoch bevorzugt nicht spitz, sondern abgerundet sind. In alternativen Ausführungsformen ist die zu reinigende Front des optischen Geräts rund, insbesondere kreisförmig.

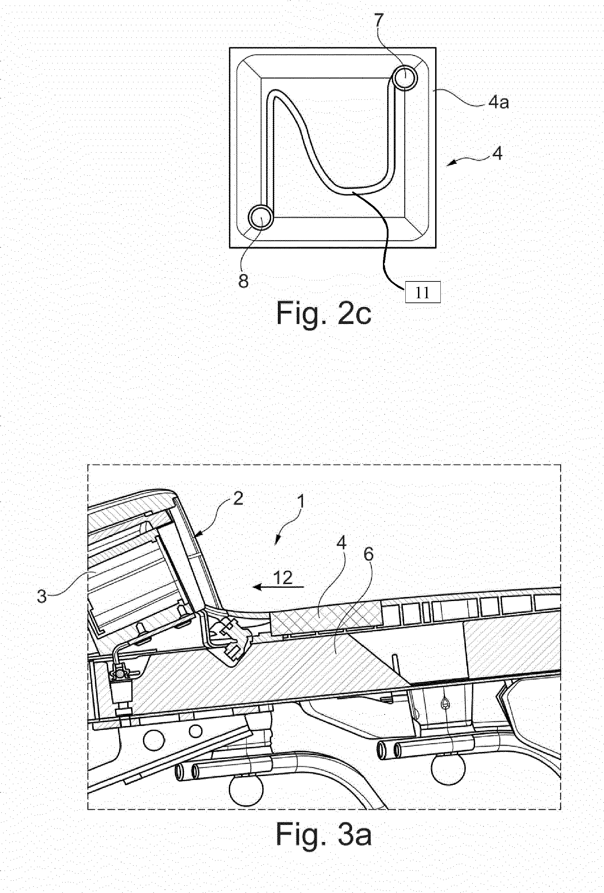

Die Reinigung der Frontseite des Geräts 3 wird mit einer Kappe 4 durchgeführt, die in Figur 2 dargestellt ist. Figur 2a zeigt eine schematische Ansicht der Außenseite der Kappe 4, Figur 2b einen Schnitt durch die Kappe entlang der Schnittebene A-A' und Figur 2c eine Ansicht der Innenseite der Kappe 4, wobei die Innenseite diejenige ist, die während der Reinigung der zu reinigenden Frontseite 2 zugewandt ist.

Die Kappe 4 ist dazu vorgesehen und ausgestaltet, die zu reinigende Fläche abzudecken und mit der zu reinigenden Fläche fluiddicht abzuschließen, sodass die Kappe 4 mit der zu reinigenden Fläche ein geschlossenes Volumen bildet. Die Kappe 4 ist dazu konkav ausgestaltet, also nach innen gewölbt, wobei die Wölbung nicht nur rund sondern auch eckig gestaltet sein kann. Weiterhin weist die Kappe 4 mindestens eine Zuführung 7 zum Zuführen eines Reinigungsfluids in das entstehende Volumen auf sowie eine Abführung 8 für das Ableiten des Reinigungsfluids aus dem Volumen auf. Dabei kann die Kappe 4 mehr als eine Zuführung und mehr als eine Abführung für das Zu- und Abführen des Reinigungsfluids aufweisen. Die Zu- und/oder Abführungen können dabei, wie in den Figuren dargestellt, auf der konvexen Rückseite der Kappe platziert sein. Alternativ können die Zu- und Abführungen an einer oder mehreren Schmalseiten und bevorzugt so platziert sein, dass das Reinigungsfluid beim Durchströmen des Volumens 10 jedenfalls über die relevanten Bereiche der zu reinigenden Frontseite strömt und diese dabei reinigt.

Figur 2b zeigt eine Ansicht der Kappe 4 entlang des Schnitts A-A'. Eine zu reinigende Frontseite ist durch die strichlinierte Linie 9 schematisch dargestellt. Die Kappe 4 bildet mit der Frontseite 9 ein Volumen 10.

Um die Frontseite 9 eines optischen Geräts zu reinigen, wird die Kappe 4 auf die zu reinigende Frontseite 9 aufgesetzt oder aufgepresst, sodass ein Volumen 10 gebildet wird und die Kappe fluiddicht mit der Frontseite 9 abschließt. Dazu kann der Randbereich 4a der Kappe 4 fluiddichtend ausgebildet sein. Die Kappe 4 kann dazu in einer Ausführungsform mindestens ein Dichtelement aufweisen. In einer Ausführungsform kann die Kappe 4 dazu auf die zu reinigende Frontseite des optischen Geräts aufgedrückt oder aufgepresst werden, um die Dichtigkeit im Randbereich der Kappe zu erreichen. Sobald die Kappe 4 auf der Frontseite des optischen Geräts platziert ist und dort fluiddicht gehalten ist, wird über die Fluidzuführung 7 ein Reinigungsfluid in das Volumen 10 hinein und über die Fluidabführung 8 abgeführt. Vorzugsweise wird die Fluidabführung mit einem Unterdruck beaufschlagt, sodass das Reinigungsfluid und eine darin gelöste Verschmutzung über die Fluidabführung 8 aus dem Volumen abgeführt wird. Das Reinigungsfluid streicht beim Durchströmen des Volumens 10 und über die Frontseite 9 des optischen Geräts. Dabei löst und damit reinigt das Reinigungsfluid die Frontseite des optischen Geräts.

Wenn die Kappe 4 auf der zu reinigenden Front 9 platziert ist, wird das Reinigungsfluid durch die Fluidzuführung 7 in das Volumen 10 geleitet und von dort über die Fluidabführung 8, also die Auslassöffnung in der Kappe 4, aus dem Volumen 10 herausgeleitet. Die Fluidabführung 8 ist dabei bevorzugt mit einem Unterdruck beaufschlagt, sodass das Reinigungsfluid aus dem Volumen 10 abgesaugt wird. Dabei kann in einer bevorzugten Ausführungsform die Fluidabführung 8 mit Unterdruck beaufschlagt werden, bevor das Reinigungsfluid über die Fluidzuführung in das Volumen 10 geführt wird, sodass die Kappe auch durch den Unterdruck auf der zu reinigenden Frontseite festgehalten wird, d.h. die Kappe sich dort festsaugt. Weiterhin ist bevorzugt, dass die Fluidabführung 8 mit Unterdruck beaufschlagt bleibt, nachdem das Reinigungsfluid durch das Volumen 10 geströmt ist und dass, wenn das Reinigungsfluid eine Flüssigkeit ist, noch ein Gas, beispielsweise Luft, durch das Volumen 10 gesaugt wird, um Flüssigkeitsrückstände von der Frontseite zu entfernen. Alternativ kann die Frontseite nach dem Ende des Reinigungsvorgangs, und wenn die Kappe 4 bereits die Reinigungsposition verlassen hat, selbständig trocknen.

In einer alternativen Ausführungsform kann die Kappe 4 auch noch nach dem Reinigungsvorgang auf der zu reinigenden Front platziert bleiben, um so als Schutz vor erneuten Verschmutzung zu dienen, beispielsweise bei einer manuellen oder maschinellen Reinigung des gesamten Melkstands. Die Kappe 4 kann dann solange auf der Front 9 platziert bleiben, bis das optische Gerät wieder benötigt wird.

Figur 2c zeigt eine Ansicht der gewölbten Innenseite der Kappe 4. Die Kappe 4 kann auf der nach Innen gewölbten Seite mindestens eine Strömungsführungseinrichtung 11 aufweisen, welche zur Führung der Strömung des Reinigungsfluids vorgesehen und eingerichtet ist. Dabei ist die mindestens eine Strömungsführungseinrichtung vorzugsweise so ausgestaltet, dass die Strömung über dem einen, oder den mehreren Objektiven der einen bzw. der mehreren Kameras durchgehend ist und keine strömungsmäßigen Totwinkel über dem einen bzw. den mehreren Objektiven entstehen, in welchen sich gelöste Schmutzpartikel ablagern und sammeln können.

In einer Ausführungsform kann die Strömungsrichtung so vorgesehen sein, insbesondere wenn das Reinigungsfluid eine Flüssigkeit ist, dass diese entgegen der Schwerkraft gerichtet ist, um die Bildung von Blasen zu vermeiden und eventuell entstehende Blasen über die Fluidabführung abgesaugt werden, sodass das gesamte Volumen 10 blasenfrei mit Reinigungsfluid gefüllt ist Eine Strömungsführungseinrichtung ist in ihrer Bauhöhe vorzugsweise so ausgestaltet, dass diese einen minimalen Abstand zu der zu reinigenden Frontseite des optischen Geräts einhält, wobei der Abstand so gewählt ist, dass typische Schmutzpartikel von der Strömungsführungseinrichtung nicht auf der Frontseite festgeklemmt werden, sondern von dem Reinigungsfluid gelöst und abtransportiert werden.

In einer Ausführungsform kann die Kappe 4 an eine Fluidzu- und abführung, in den Figuren nicht dargestellt, von Reinigungsfluid angeschlossen sein, sodass Reinigungsfluid durch die Kappe strömen kann, wenn die Kappe 4 auf einer zu reinigenden Frontseite 9 platziert ist. In einer Ausführungsform kann die Fluidzu- und abführung mit einem in dem Melkstand ohnehin vorhandenen Reinigungssystem verbunden sein, sodass das in dem Melkstand bereits vorhandene Reinigungsfluid bzw. Spülwasser, welches typischerweise zur Innenreinigung des Melkstands verwendet wird, mitgenutzt wird. Dabei kann in einer bevorzugten Ausführungsform automatisch zwischen einem fettlösenden und einem kalklösenden Reinigungsfluid umgeschaltet werden. Vorzugsweise ist das Reinigungsfluid so gewählt, dass etwaige Rückstände auf der zu reinigenden Oberfläche schnell und rückstandsfrei abtrocknen.

Die Kappe 4 kann in der Vorrichtung maschinell bewegbar angeordnet sein, sodass die Kappe 4 aus einer Ruheposition in eine Reinigungsposition bewegt werden kann. Ein entsprechender Antrieb ist dazu vorzugsweise mit einer Steuerung verbunden, welche zu voreingestellten Zeiten oder bei bestimmten Anlässen den Antrieb so ansteuert, dass die Kappe 4 von der Ruhe- in die Reinigungsposition verfahren wird. Auf diese Weise kann die Kappe 4 regelmäßig, beispielsweise nach Ablauf einer vorgegebenen Zeitspanne, in die Reinigungsposition verfahren werden, um dort die Frontseite des optischen Geräts zu reinigen. Alternativ kann die Kappe zu bestimmten Anlässen in die Reinigungsposition verfahren und eine Reinigung durchgeführt werden, so beispielsweise nach einem Melkvorgang, wenn das Tier den Melkstand verlassen hat, oder vor dem Beginn des Melkvorgangs, wenn das Tier gerade den Melkstand betritt oder betreten hat.

In einer Ausführungsform ist die Kappe 4 verschwenkbar angeordnet. Dazu kann die Kappe 4 an einem entsprechend bewegbaren Arm angeordnet sein, wobei der Arm maschinell angetrieben von einer Ruheposition in eine Reinigungsposition verschwenkt werden kann. Der bewegbare Arm kann in einer Ausführungsform an dem Melkzeug angeordnet sein. In diesem Fall kann die Kappe 4 solange an der zu reinigenden Fläche 2 platziert sein, bis ein Bild erzeugt werden muss. Sobald das Bild erzeugt wurde, kann die Kappe 4 wieder in die Reinigungsposition gebracht werden, um somit das optische Gerät während eines Melkvorgangs zu schützen. Die Kappe 4 wird damit nur dann aus der Reinigungsposition bewegt, wenn ein oder mehrere aufeinanderfolgende Bilder erzeugt werden.

In einer alternativen Ausführungsform kann die Kappe 4 in einem Randbereich 4a rotierbar und in der Nähe der Frontseite gelagert sein, sodass die Kappe nur mit einer Drehbewegung aus der Ruhe- in die Reinigungsposition geklappt wird. In einer alternativen, bevorzugten Ausführungsform, siehe Figuren 3a-d, ist die Kappe 4 verschiebbar gelagert, sodass die Kappe 4 von einer Ruheposition in die Reinigungsposition schienengeführt bewegt werden kann.

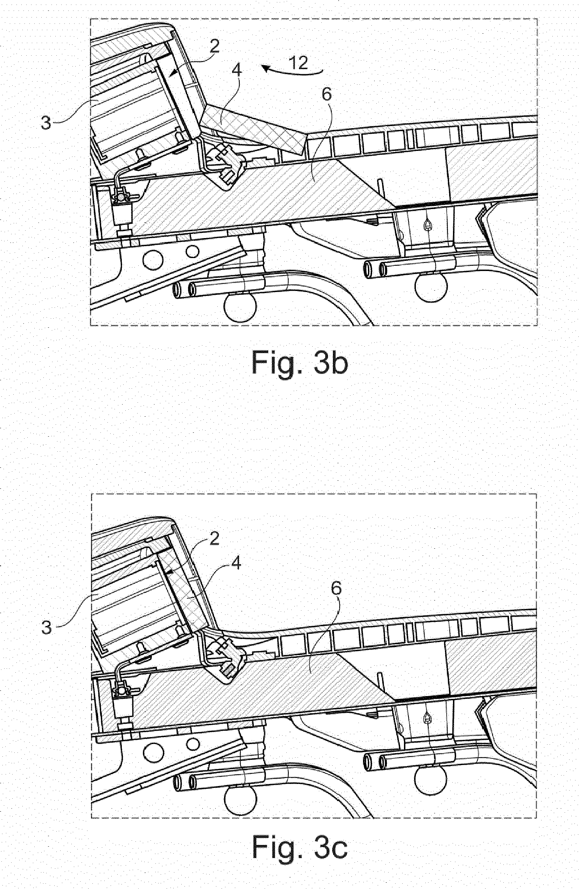

Figur 3a zeigt eine Schnittansicht durch die in Fig. 1 dargestellte Vorrichtung 1. Die Figur zeigt die Kappe 4 in der Ruheposition. Die Frontseite 2 des optischen Geräts 3 ist dabei ein Schutzglas, welches vor einem Objektiv einer Kamera 3 platziert ist. Die Kappe 4 ist in der dargestellten Ausführungsform in Schienen geführt, die in der schematischen Darstellung nicht gezeigt sind, sodass die Kappe schienengeführt vorzugsweise in einer translatorischen Bewegung aus der dargestellten Ruheposition in die Reinigungsposition bewegt werden kann, siehe hierzu Fig. 3b-c unten. Dabei kann die Kappe 4 von einem herkömmlichen maschinellen Antrieb, beispielsweise einer motorisch angetriebenen Gewindespindel oder mittels eines Zahnriemens oder mittels eines Hydraulik- oder Pneumatikzylinders entlang der Schienen von der Ruhe- in die Reinigungsposition bewegt werden. In der Ruheposition ist die Kappe 4 vorzugsweise in den Melkstand so integriert, dass die Kappe vor Beschädigungen und Verschmutzungen geschützt ist, wobei insbesondere die konkave Innenseite der Kappe 4 vor Verschmutzung geschützt ist.

Fig. 3b zeigt einen Zustand der Vorrichtung, in welchem die Kappe 4 schienengeführt von der Ruheposition, siehe Fig. 3a, in die Reinigungsposition und in Richtung des Pfeils, siehe Fig. 3c, bewegt wird.

Fig. 3c zeigt den Zustand der Vorrichtung, in welchem die Kappe 4 in der Reinigungsposition, d.h. an der Front eines optischen Geräts, hier der Kamera 3, positioniert ist. In der hier dargestellten Ausführungsform überdeckt die Kappe 4 die zu reinigende Front 2 des optischen Geräts vollständig. In alternativen Ausführungsformen kann die Vorrichtung auch so ausgestaltet sein, dass die Abdecckappe die zu reinigende Front 2 nicht vollständig, sondern nur teilweise abdeckt.

In einer Ausführungsform kann die Vorrichtung 1 so ausgestaltet sein, dass die Fluidzuführung 7 sowie die Fluidabführung 8 beim Erreichen der Reinigungsposition automatisch mit einem Spülsystem verbunden wird, welches dann an der Fluidabführung einen Unterdruck zur Absaugung und an der Fluidzuführung ein Reinigungsfluid mit Druck zur Verfügung stellt. Die automatische Verbindung kann in einer Ausführungsform dadurch bewirkt werden, dass die Anschlussstutzen der Fluidzuführung 7 bzw. der Fluidabführung 8 automatisch in entsprechende Aufnahmen geführt sind und dort mit ausreichender Dichtigkeit die Verbindung zu dem Spülsystem bewirkt wird.

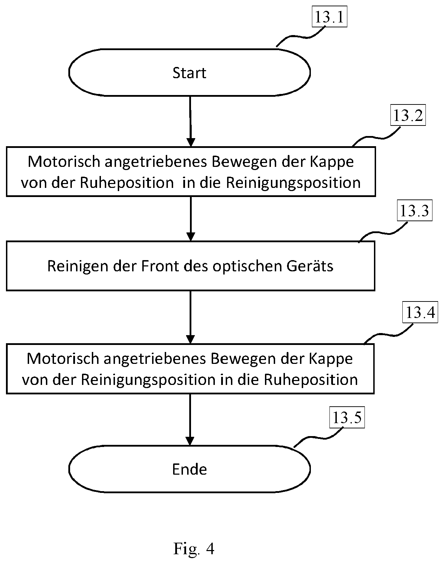

Figur 4 zeigt die Schritte eines Reinigungsverfahrens einer Front 2 eines optischen Geräts 3 mit einer Vorrichtung 1. Nach dem Start 13.1 wird im ersten Schritt 13.2 die Reinigungskappe 4 maschinell, beispielsweise motorisch oder hydraulisch, angetrieben, insbesondere elektromotorisch, und aus der Ruheposition in die Reinigungsposition bewegt, wobei das Bewegen der Kappe ein Verschwenken, oder ein schienengeführtes Verschieben bzw. Verfahren sein kann.

Sobald die Kappe 4 die Reinigungsposition erreicht hat, beginnt die Reinigung der Front des optischen Geräts, Schritt 13.3, indem die Fluidabführung der Kappe mit einem Unterdruck beaufschlagt und das Reinigungsfluid über die Fluidzuführung in das Volumen 10 geführt wird. Vorzugsweise wird hierbei die Fluidabführung mit dem Unterdruck beaufschlagt, bevor das Reinigungsfluid in das Volumen 10 eingeführt wird. Das Reinigungsfluid ist dabei eine Spülflüssigkeit, welche ebenfalls für eine Spülung der Melkbecher bzw. des Melkgeschirrs verwendet wird. Auf diese Weise benötigt die Vorrichtung 1 keine separate Einrichtung zur Versorgung mit Reinigungsfluid. Sobald die Reinigung der Front abgeschlossen ist, wird die Kappe 4 wieder maschinell angetrieben aus der Reinigungsposition zurück in die Ruheposition bewegt, 13.4. Sobald die kappe die Ruheposition wieder erreicht hat, endet das Reinigungsverfahren., 13.5.

Die Vorrichtung 1 ermöglicht auf diese Weise die vollautomatische Reinigung der Front eines optischen Geräts, insbesondere einer Kamera oder einer dazu gehörigen Abdeckung oder Verglasung, mittels eines Reinigungsfluids.

### Bezugszeichenliste

- 1: Vorrichtung zur Reinigung einer Front eines optischen Geräts
- 2: Front eines optischen Geräts
- 3: Optisches Gerät
- 4: Kappe
- 4a: Randbereich der Kappe
- 5: Melkbecher
- 6: Melkstand, Melkroboter
- 7: Fluidzuführung
- 8: Fluidabführung
- 9: Frontseite
- 10: Volumen
- 11: Strömungsführungseinrichtung
- 12: Pfeil, Bewegungsrichtung
- 13: Verfahrensschritte eines Reinigungsablaufs

## Patentansprüche

1. Anordnung umfassend wenigstens einen Melkstand, der ein optisches Gerät (3) aufweist, und eine Vorrichtung (1) zur Reinigung einer Front (2) des optischen Geräts (3) mittels eines Fluids, umfassend eine bewegbar angeordnete Kappe (4) mit einer Zuführung (7) für das Fluid und einer Abführung (8) für das Fluid, und
wobei die Kappe (4) dazu eingerichtet ist, wenigstens einen Teilbereich der Front fluiddicht abzudecken, und
mit einer Einrichtung zum Bewegen der Kappe (4) aus einer Ruheposition in eine Reinigungsposition, wobei die Zuführung (7) und/oder die Abführung (8) in einer Fluidverbindung mit einer Reinigungsvorrichtung des Melkstands steht.

2. Vorrichtung nach Anspruch 1, wobei die Kappe die Frontseite des optischen Geräts in der Abdeckposition vollständig abdeckt.

3. Vorrichtung nach einem der vorstehenden Ansprüche, wobei die Kappe auf der Innenseite mindestens eine Strömungsführungseinrichtung (11) zur Führung des Fluids aufweist.

4. Vorrichtung nach einem der vorstehenden Ansprüche, wobei die Kappe (4) an einem verschwenkbaren Arm angeordnet ist.

5. Vorrichtung nach einem der vorstehenden Ansprüche, wobei die Kappe (4) in einer Schiene verschiebbar angeordnet ist.

6. Vorrichtung nach einem der vorstehenden Ansprüche, wobei das Fluid eine Reinigungsflüssigkeit ist.

7. Verfahren zum Reinigen einer Front (2) eines optischen Geräts (3) eines Melkstands mit einer Vorrichtung mittels eines Fluids, wobei die Vorrichtung eine bewegbare Kappe (4) mit einer Zuführung (7) und einer Abführung (8) für das Fluid aufweist und die Kappe dazu eingerichtet ist wenigstens einen Teilbereich der Front (2) fluiddicht abzudecken, wobei die Vorrichtung (1) weiterhin eine Einrichtung zum Bewegen der Kappe (4) aus einer Ruheposition in eine Reinigungsposition und eine Einrichtung zum Zu- und Abführen von Fluid in die Kappe (4) aufweist, und das Verfahren mindestens die folgenden Schritte umfasst
- maschinell angetriebenes Bewegen der Kappe (4) aus einer Ruheposition in eine Reinigungsposition und
- Zuführen eines Reinigungsfluids einer Reinigungsvorrichtung eines Melkstands in ein Volumen (10) der Kappe (4), wenn die Kappe in der Reinigungsposition angeordnet ist,
- Abführen des Reinigungsfluids aus dem Volumen (10) und
- maschinell angetriebenes Bewegen der Kappe (4) aus der Reinigungsposition in die Ruheposition.

8. Verfahren nach Anspruch 7, wobei das Reinigungsfluid aus dem Volumen (10) in zu der Reinigungsvorrichtung zurückgeführt wird..

9. Verfahren nach Anspruch 7 oder 8, wobei die Kappe (4) während eines Melkens eines Tieres in der Reinigungsposition platziert ist.
